# EUROPÄISCHE PATENTSCHRIFT

(11) **EP 2 052 199 B1**
(45) Veröffentlichungstag und Bekanntmachung des Hinweises auf die Patenterteilung: **14.02.2018**
(21) Anmeldenummer: 07787536.7
(22) Anmeldetag: 13.07.2007
(51) Int. Cl.: F28D 7/08, F28F 9/013, B01F 15/06

(54) **APPARAT ZUR KOMBINIERTEN DURCHFÜHRUNG VON WÄRMEÜBERTRAGUNG UND STATISCHEM MISCHEN MIT EINER FLÜSSIGKEIT**
APPARATUS FOR COMBINING HEAT EXCHANGE AND STATIC MIXING WITH A LIQUID
APPAREIL COMBINÉ D'ÉCHANGE DE CHALEUR ET DE MÉLANGE STATIQUE AVEC UN LIQUIDE

(30) Priorität: 08.08.2006 EP 06118609
(43) Veröffentlichungstag der Anmeldung: 29.04.2009
(73) Patentinhaber: Sulzer Chemtech AG, 8404 Winterthur (CH)
(72) Erfinder: BUCHER, Patrick, CH-8404 Winterthur (CH); STEINER, Kurt, CH-8330 Pfäffikon (CH)
(74) Vertreter: Henkel, Breuer & Partner
(86) Internationale Anmeldenummer: PCT/EP2007/057268
(87) Internationale Veröffentlichungsnummer: WO 2008/017571

(56) Entgegenhaltungen:
- EP-A1- 0 009 638
- EP-A1- 0 776 692
- EP-A2- 0 884 548
- WO-A-2004/007063
- DE-A1- 1 501 614
- DE-U1- 8 202 599
- DE-U1- 8 202 620
- FR-A- 2 346 662
- GB-A- 1 376 330
- US-A- 3 346 043
- US-A- 4 865 460

## Beschreibung

Die Erfindung betrifft einen Apparat, der eine Wärmeübertragung zwischen einer Flüssigkeit und einem wärmetransportierenden Medium mit einem statischen Mischen der Flüssigkeit kombiniert. Die Erfindung bezieht sich auch auf eine Verwendung dieses Apparats.

Die EP-A- 0 009 638 offenbart einen als Reaktor ausgebildeten Wärmeübertrager, mit dem Reaktionswärme bei einer Polymerisation zum Einhalten einer optimalen Temperatur entfernt wird. Dieser Polymerisationsreaktor umfasst ein rohrartiges Gehäuse und Einbauten, mit denen die Wärmeübertragung aus einem polymerisierenden Gemisch, einer hochviskosen Flüssigkeit, durchführbar ist. Die Einbauten bewirken gleichzeitig ein statisches Mischen dieser hochviskosen Flüssigkeit.

Eine derartige Einrichtung mit Gehäuse und Einbauten ist ein Apparat, für den diverse Anwendungen gefunden worden sind. Eine typische Anwendung ist das Kühlen einer Polyesterschmelze, die bei rund 290°C in einem Polykondensationsreaktor erzeugt wird. Nach der Entnahme dieses Produkts aus diesem Reaktor muss die Temperatur um 10°C abgesenkt werden, um ein Zersetzen des Produktes zu vermindern. Das Kühlen hat im Apparat gleichmässig und mit einem engen Verweilzeitspektrum der Polyesterschmelze zu erfolgen, um ein homogenes Produkt zu erhalten. Beim Herstellen von dünnen Polyesterfäden ist die Homogenität der Schmelzetemperatur sehr präzise einzuhalten.

Der aus der EP-A- 0 009 638 bekannte Polymerisationsreaktor zur kombinierten Durchführung von Wärmeübertragung und statischem Mischen umfasst ein Gehäuse in Form eines Mantels, der sich longitudinal zwischen einem Kopfende und einem Basisende erstreckt, und Einbauten, die eine wärmeübertragende und mischende Struktur bilden. Die Einbauten bestehen aus sich in longitudinaler Richtung erstreckenden Rohren, die serpentinenartig geformt sind. Die Rohre werden nachfolgend gelegentlich als "Wärmeübertrager-/Mischrohre" bezeichnet. Jedes Rohr weist gekrümmte Rohrteile und diese gekrümmten Rohrteile verbindende Rohrteile auf, die gerade und parallel zu einander sind. Die Rohre liegen in ebenen, sich berührenden Lagen; und die geraden Rohrteile benachbarter Rohre kreuzen sich. Ein wärmetransportierendes Medium wird als innerer Strom durch die Rohre der Einbauten gepumpt. Die Rohre sind am Kopfende angeschlossen, wo auch eine Eintrittsstelle für den äußeren Strom des zu kühlenden Produkts angeordnet ist. Das gekühlte Produkt verlässt den Apparat am Basisende, an dem die Einbauten nicht angeschlossen sind. Dank der fehlenden Verbindung zwischen Basisende und Einbauten erübrigt sich ein Dehnungsausgleich, der aufgrund unterschiedlicher Wärmedehnung der Einbauten und des Gehäuses erforderlich wäre. Dehnungsunterschiede ergeben sich insbesondere beim Anfahren, weil die Rohrschlangen fast unmittelbar die Temperatur des Wärmeträgers annehmen, während das Gehäuse nur indirekt und langsam über das Polymer im Mantelraum aufgewärmt wird.

Im bekannten Polymerisationsreaktor erfolgt eine Wärmeübertragung mehrgängig, nämlich jeweils in einer ersten Hälfte eines Rohrs im Gleichstrom und in einer zweiten Hälfte im Gegenstrom. Der innere Strom des wärmetransportierenden Mediums kreuzt aufgrund der serpentinenartigen Form den äußeren Strom der hochviskosen Flüssigkeit, so dass mit dem Gleich- bzw. Gegenstrom auch ein Kreuzstrom kombiniert ist.

In der DE 82 02 620 U1 ist ein Apparat beschrieben, der eine Wärmeübertragung zwischen einer Flüssigkeit und einem wärmetransportierenden Medium mit einem statischen Mischen der Flüssigkeit kombiniert. In einem Mantel des Apparats, der sich longitudinal zwischen einem Kopfende und einem Basisende erstreckt, sind Einbauten angeordnet, sodass die Einbauten eine wärmeübertragende und mischende Struktur bilden. Die Einbauten umfassen Rohre, sodass das wärmetransportierende Medium als innerer Strom innerhalb der Rohre der Einbauten vom Basisende zum Kopfende förderbar ist und die Flüssigkeit als äußerer Strom außerhalb der Rohre vom Kopfende zum Basisende förderbar ist. Die Rohre der Einbauten bilden dabei ebene, parallel angeordnete Lagen, in welchen sich ein jeweiliges Rohr serpentinenartig, Bögen und parallele Teilrohrstücke umfassend, von einem Eintrittsende zu einem Austrittsende erstreckt.

Die US 3 346 043 A beschreibt einen ähnlichen Apparat, bei welchem zusätzlich Verstärkungselemente zwischen den Rohren vorgesehen sind.

In der WO 2004/007063 A ist ebenfalls ein ähnlicher Apparat mit Verstärkungselementen zwischen den Rohren beschrieben.

Ferner beschreibt auch die DE 82 02 599 U1 einen ähnlichen Apparat, bei welchem die Stabilität der Rohre durch einen zentralen Zuganker erhöht ist. Aufgabe der Erfindung ist es, einen verbesserten Apparat zu schaffen, der funktionell wie der bekannte Polymerisationsreaktor ausgebildet ist, wobei jedoch in diesem Apparat die Wärmeübertragung effizienter durchführbar ist. Diese Aufgabe wird durch den im Anspruch 1 definierten Apparat gelöst.

Der Apparat, der eine Wärmeübertragung zwischen einer Flüssigkeit und einem wärmetransportierenden Medium mit einem statischen Mischen der Flüssigkeit kombiniert, umfasst Einbauten, die in einem Mantel des Apparats angeordnet sind, der sich longitudinal zwischen einem Kopfende und einem Basisende erstreckt, sodass die Einbauten eine wärmeübertragende und mischende Struktur bilden. Die Einbauten umfassen Rohre, sodass das wärmetransportierende Medium als innerer Strom innerhalb der Rohre der Einbauten vom Basisende zum Kopfende förderbar ist, die Flüssigkeit als äußerer Strom außerhalb der Rohre vom Kopfende zum Basisende förderbar ist. Die Rohre der Einbauten bilden ebene, parallel angeordnete Lagen, in welchen sich ein jeweiliges Rohr serpentinenartig, Bögen und parallele Teilrohrstücke umfassend, von einem Eintrittsende zu einem Austrittsende erstreckt. Verstärkungselemente sind vorgesehen, welche die Rohre der Einbauten in longitudinaler Richtung gegen durch die Flüssigkeit erzeugte Druckgradienten stabilisieren. Die Verstärkungselemente verbinden die parallelen Teilrohrstücke in einem Hauptbereich, um eine nicht dehnbare Teilstruktur zu bilden. In einem zum Hauptbereich komplementären Nebenbereich bleiben die Einbauten als eine longitudinal dehnbare Teilstruktur zumindest teilweise unverstärkt. Die abhängigen Ansprüche 2 bis 11 betreffen vorteilhafte Ausführungsformen des erfindungsgemässen Apparats. Eine Verwendungsmöglichkeit des erfindungsgemässen Apparats ist Gegenstand des Anspruchs 12 Nachfolgend wird die Erfindung anhand der Zeichnungen erläutert. Es zeigen:
- Fig. 1: ein Kopfende des erfindungsgemässen Apparats mit einem Wärmeübertrager-/Mischrohr,
- Fig. 2: zwei Lagen benachbarter Wärmeübertrager-/Mischrohre,
- Fig. 3: einen teilweise dargestellten Längsschnitt des erfindungsgemässen Apparats und
- Fig. 4: ein weiteres Beispiel von Verstärkungselementen.

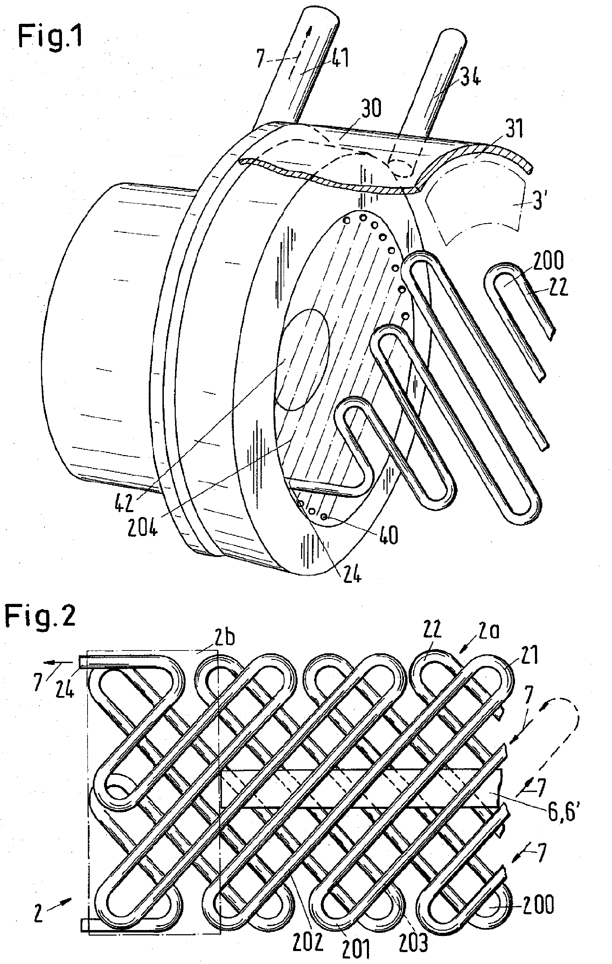

Ein erfindungsgemässer Apparat 1 wird anhand der Figuren 1 bis 4 beschrieben. Dieser Apparat 1, der eine Wärmeübertragung zwischen einer Flüssigkeit 8 und einem wärmetransportierenden Medium 7 mit einem statischen Mischen der Flüssigkeit 8 kombiniert, umfasst Einbauten 2 und einen Mantel 3 mit einem rohrartigen, die Flüssigkeit 8 führenden Gehäuse 3'. Die zu behandelnde Flüssigkeit 8 hat typischerweise eine relativ hohe dynamische Viskosität von mindestens 1 Pa·s; sie ist bei wichtigen Anwendungen des Apparats 1 eine Polymerschmelze, die einen Druck von beispielsweise 50 bar aufweist.

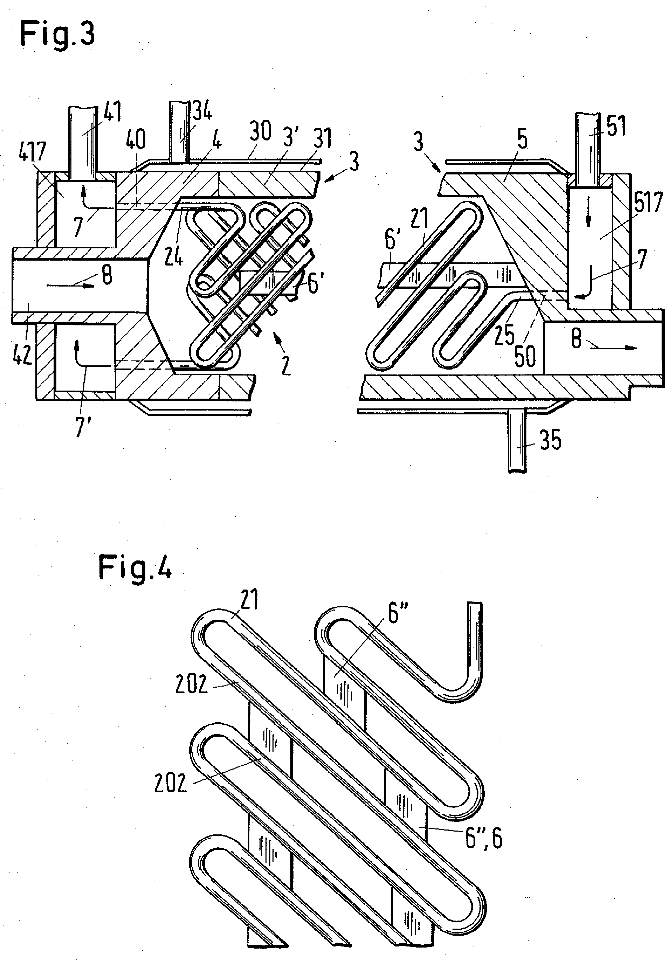

Der Mantel 3 erstreckt sich longitudinal zwischen einem Kopfende 4 und einem Basisende 5. Die Einbauten 2 bilden eine wärmeübertragende und mischende Struktur. Das wärmetransportierende Medium 7 fliesst als innerer Strom in Rohren 21, 22 der Einbauten 2 vom Basisende 5 zum Kopfende 4. Die Flüssigkeit 8 fliesst als äusserer Strom vom Kopfende 4 zum Basisende 5. Es sind Verstärkungselemente 6 (siehe Figuren 2 und 4) vorgesehen, welche die Einbauten 2 in longitudinaler Richtung gegen durch die Flüssigkeit 8 erzeugte Druckgradienten stabilisieren. Die Einbauten 2 sind in einem Hauptbereich durch die Verstärkungselemente 6 zu einer nicht dehnbaren Teilstruktur 2a verbunden. In einem zum Hauptbereich komplementären Nebenbereich bleiben die Einbauten 2 unverstärkt oder nur teilweise verstärkt, so dass eine flexible, longitudinal dehnbare Teilstruktur 2b (strichpunktiert umrandetes Rechteck) gebildet ist. Dank dieser flexiblen Teilstruktur 2b ergibt sich ein Dehnungsausgleich, der aufgrund unterschiedlicher Wärmedehnung der Einbauten 2 und des Gehäuses 3', welche beispielsweise beim Anfahren des Apparats auftreten, erforderlich ist.

Im erfindungsgemässen Apparat 1 erfolgt die Wärmeübertragung eingängig, nämlich im Gegenstrom. Beim Gegenstrom ergibt sich bekanntlich im Mittel eine grössere Temperaturdifferenz zwischen innerem und äusseren Strom als beim Gleichstrom. Folglich ist die Wärmeübertragung effizienter durchführbar als bei der mehrgängigen Wärmeübertragung des bekannten Polymerisationsreaktors. Daher lässt sich beispielsweise ein solcher Reaktor, der eine Länge von 2 m hat, durch einen Gegenstromreaktor ersetzen, der um rund 35 cm kürzer ist (wobei beide Reaktoren gleiche Querschnittsflächen und gleiche Kühlleistungen aufweisen). Gleichzeitig wird der Druckverlust des inneren Stroms (Wärmeträger in Form eines Thermoöls) halbiert.

Die Wärmeübertrager-/Mischrohre, d.h. die Rohre 21, 22 der Einbauten 2 bilden ebene, parallel angeordnete Lagen 200, deren transversale Ausrichtung in Fig. 1 durch strichpunktierte Linien 204 angedeutet ist. In jeder Lage 200 erstreckt sich das Rohr 22 (bzw. 21) serpentinenartig, Bögen 201 und parallele Teilrohrstücke 202 umfassend, von einem Eintrittsende 25 am Basisende 5 zu einem Austrittsende 24 am Kopfende 4. Die Teilrohrstücke 202 benachbarter Lagen 200 kreuzen sich an Kreuzungsstellen 203. In Fig. 3 sind links zwei benachbarte Rohre 21 und 22 dargestellt, rechts nur das Rohr 21.

Im Hauptbereich der Einbauten 2 sind die Rohre 21 und 22 zweier benachbarter Lagen 200 auf einer axialen, d.h. longitudinal ausgerichteten Stange 6' befestigt, die eine vorteilhafte Ausführungsform der Verstärkungselemente 6 bildet. Die Stange 6' ist am Basisende 5 befestigt und erstreckt sich über die nicht flexible Teilstruktur 2a bis zur flexiblen Teilstruktur 2b, die den Dehnungsausgleich ermöglicht. Es ist auch eine Ausführungsform möglich, bei der die Stangen 6' am Kopfende 4 befestigt sind und die flexible Teilstruktur 2b sich am Basisende 5 befindet.

Die Verstärkungselemente 6 sind mit Vorteil als streifenartige Platten (nicht dargestellt), Stangen 6' (Fig. 2) oder Verbindungsstücke 6" (Fig. 4) ausgebildet, die auf eine Mehrzahl von Stellen verteilt angeordnet sind. Unter den streifenartigen Platten werden Verstärkungselemente 6 verstanden, die zwar vergleichbar einem Stangenabschnitt aufgebaut, aber ähnlich wie die Verbindungsstücke 6" in Fig. 4 verteilt angeordnet sind. Auf den Stangen 6' oder Platten sind nutenartige Vertiefungen zum Einlegen der Rohre 21 und 22 vorgesehen, so dass die durch diese Platten verbundenen Rohre sich berühren oder in relativ kleinen Abständen angeordnet sind, die wesentlich kleiner als die Dicke der Platten sind. Vorzugsweise werden die befestigenden Verbindungen zwischen den Rohren und den Platten bzw. zwischen den Rohren und den Stangen 6' durch Löten in einem Lötofen hergestellt. Die Verbindungen können selbstverständlich auch durch Schweissen hergestellt werden. Bei der in Fig. 4 illustrierten Verstärkungsform verbinden die Verbindungsstücke 6" jeweils zwei benachbarte Teilrohrstücke 202. Diese sind vorzugsweise angeschweisst.

Die nicht flexible Teilstruktur 2a des Hauptbereichs ist so widerstandsfähig ausgebildet, dass die Einbauten intakt bleiben, wenn im äusseren Strom aufgrund des Strömungswiderstandes longitudinale Druckunterschiede zwischen den Apparatenden von mindestens 10 bar, vorzugsweise 40 bar, auftreten.

Der erfindungsgemässe Apparat 1 ist in der Regel so konstruiert, dass das Kopfende 4 und das Basisende 5 jeweils mit dem Mantel 3 sowie den Einbauten 2 nicht lösbar verbunden sind. In diesem Fall sind die Einbauten 2 nicht ausbaubar. Sind ausbaubare Einbauten 2 erforderlich, so kann es vorteilhafter sein, den bereits bekannten Apparat (Polymerisationsreaktor) zu verwenden.

Der Mantel 3 kann zwischen einer äusseren Wand 30 und dem rohrartigen Gehäuse 3' einen Ringspaltraum 31 enthalten, durch den ein Wärmeträger, vorzugsweise ein Teil des wärmetransportierenden Mediums 7, leitbar ist (Eintrittsleitung 35 und Austrittleitung 34 des Wärmeträgers).

Die Wärmeübertrager-/Mischrohre 21, 22 sind am Kopfende 4 in Bohrungen 40 und am Basisende 5 in Bohrungen 50 eingebracht und befestigt. Die Bohrungen 40 sind auf zwei Ringsegmenten in Mantelnähe angeordnet; die Bohrungen 50 sind auf einem die Mitte des Basisendes 5 querenden Streifen angeordnet. Das wärmetransportierende Medium 7 wird durch eine Eintrittsleitung 51 sowie eine Verteilkammer 517 in die einzelnen Rohre 21, 22 der Einbauten 2 eingespeist und an deren Ausgang in einer Sammelkammer 417 sowie einer Austrittsleitung 41 vereinigt.

Für die Flüssigkeit 8 weisen das Kopfende 4 eine zentrale Eintrittsöffnung 42 und das Basisende 5 eine neben dem Zentrum angeordnete Austrittsöffnung 52 auf. Es können auch beide Öffnungen 42 und 52 im Zentrum oder exzentrisch angeordent sein, oder die Eintrittsöffnung 42 exzentrisch und die Austrittsöffnung 52 im Zentrum.

Der erfindungsgemässe Apparat 1 lässt sich beispielsweise für eine Polyesterschmelze oder ein anderes geschmolzenes Polymer (Flüssigkeit 8) verwenden, um durch Kühlung eine Zersetzung zu minimieren. Eine andere Verwendung ist die Erwärmung eines Polymers, um dieses fliessfähiger zu machen. Eine weitere Verwendungen ist das Heizen oder Kühlen von hochviskosen Medien im Nahrungsmittelbereich, wie Schokoladen-, Caramel- oder Kaugummimassen. Als wärmetransportierendes Medium 7 kommt in der Regel ein Thermoöl zum Einsatz. Es sind auch andere Medien wie Wasser oder Dampf verwendbar.

## Patentansprüche

1. Apparat (1), der eine Wärmeübertragung zwischen einer Flüssigkeit (8) und einem wärmetransportierenden Medium (7) mit einem statischen Mischen der Flüssigkeit kombiniert,
wobei Einbauten (2) in einem Mantel (3) des Apparats (1) angeordnet sind, der sich longitudinal zwischen einem Kopfende (4) und einem Basisende (5) erstreckt, sodass die Einbauten (2) eine wärmeübertragende und mischende Struktur bilden,
wobei die Einbauten Rohre (21, 22) umfassen, sodass das wärmetransportierende Medium als innerer Strom innerhalb der Rohre (21, 22) der Einbauten (2) vom Basisende (5) zum Kopfende (4) förderbar ist, die Flüssigkeit (8) als äußerer Strom außerhalb der Rohre (21, 22) vom Kopfende (4) zum Basisende (5) förderbar ist,
wobei die Rohre (21, 22) der Einbauten (2) ebene, parallel angeordnete Lagen (200) bilden, in welchen sich ein jeweiliges Rohr (21, 22) serpentinenartig, Bögen (201) und parallele Teilrohrstücke (202) umfassend, von einem Eintrittsende (25) zu einem Austrittsende (24) erstreckt, **dadurch gekennzeichnet, dass**
Verstärkungselemente (6, 6', 6") vorgesehen sind, welche die Rohre (21, 22) der Einbauten (2) in longitudinaler Richtung gegen durch die Flüssigkeit erzeugte Druckgradienten stabilisieren,
wobei die Verstärkungselemente (6, 6', 6") die parallelen Teilrohrstücke (202) in einem Hauptbereich verbinden, um eine nicht dehnbare Teilstruktur (2a) zu bilden, und
wobei die Einbauten (2) in einem zum Hauptbereich komplementären Nebenbereich als eine longitudinal dehnbare Teilstruktur (2b) zumindest teilweise unverstärkt bleiben.

2. Apparat nach Anspruch 1, **dadurch gekennzeichnet, dass** die Teilrohrstücke (202) benachbarter Lagen (200) sich kreuzen.

3. Apparat nach Anspruch 1 oder 2, **dadurch gekennzeichnet, dass** im Hauptbereich der Einbauten (2) die Rohre (21, 22) auf axialen, d.h. longitudinal ausgerichteten Stangen (6') befestigt sind, wobei auf den Stangen (6') nutenartige Vertiefungen zum Einlegen der Rohre (21, 22) vorgesehen sind, so dass die durch diese Stangen (6') verbundenen Rohre (21, 22) sich berühren oder in relativ kleinen Abständen angeordnet sind, die wesentlich kleiner als die Dicke der Stangen sind.

4. Apparat nach Anspruch 1 oder 2, **dadurch gekennzeichnet, dass** im Hauptbereich der Einbauten (2) die Rohre (21, 22) mittels Elementen in Form von streifenartigen Platten verbunden sind, wobei auf den Platten nutenartige Vertiefungen zum Einlegen der Rohre (21, 22) vorgesehen sind, so dass die durch diese Platten verbundenen Rohre (21, 22) sich berühren oder in relativ kleinen Abständen angeordnet sind, die wesentlich kleiner als die Dicke der Platten sind.

5. Apparat nach Anspruch 4, **dadurch gekennzeichnet, dass** die befestigenden Verbindungen vorzugsweise durch Löten in einem Lötofen hergestellt sind.

6. Apparat nach einem der vorhergehenden Ansprüche, **dadurch gekennzeichnet, dass** im Hauptbereich der Einbauten (2) die Rohre (21, 22) mittels Verbindungsstücken (6") verbunden sind, wobei die befestigenden Verbindungen vorzugsweise durch Schweißen hergestellt sind.

7. Apparat nach einem der vorhergehenden Ansprüche, **dadurch gekennzeichnet, dass** der Hauptbereich der Einbauten (2) derart widerstandsfähig ausgebildet ist, dass bei einem longitudinalen Druckunterschied zwischen den Apparatenden von mindestens 10 bar, vorzugsweise 40 bar, die Einbauten intakt bleiben.

8. Apparat nach einem der vorhergehenden Ansprüche, **dadurch gekennzeichnet, dass** das Kopfende (4) und das Basisende (5) jeweils mit dem Mantel (3) sowie den Einbauten (2) nicht lösbar verbunden sind und somit die Einbauten nicht ausbaubar sind.

9. Apparat nach einem der vorhergehenden Ansprüche, **dadurch gekennzeichnet, dass** der Mantel (3) einen Ringspaltraum (31) umfasst, durch den wärmetransportierendes Medium leitbar ist.

10. Apparat nach einem der vorhergehenden Ansprüche, **dadurch gekennzeichnet, dass** die Rohre (21, 22) der Einbauten (2) am Kopf- und Basisende (4 bzw. 5) in Bohrungen (40) eingebracht und befestigt sind, die auf einem Ring in Mantelnähe oder auf einem die Mitte des Kopfbzw. Basisendes querenden Streifen angeordnet sind.

11. Apparat nach einem der vorhergehenden Ansprüche, **dadurch gekennzeichnet, dass** für die Flüssigkeit (8) das Kopfende (4) eine zentrale Eintrittsöffnung (42) und das Basisende (5) eine dezentrale, neben dem Zentrum angeordnete Austrittsöffnung (52) aufweisen, oder dass das Umgekehrte gilt, oder dass an beiden Enden (4, 5) dezentrale bzw. zentrale Öffnungen (42, 52) angeordnet sind.

12. Verwendung eines Apparats (1) gemäß einem der vorhergehenden Ansprüche, **dadurch gekennzeichnet, dass** die Flüssigkeit (8) ein geschmolzenes Polymer, beispielsweise eine Polyesterschmelze ist und das wärmetransportierende Medium (7) ein Thermoöl ist,

13. Verwendung eines Apparats (1) nach Anspruch 12, **dadurch gekennzeichnet, dass** die Schmelze gekühlt wird, beispielsweise um eine Zersetzung zu minimieren.

14. Verwendung eines Apparats (1) nach Anspruch 12, **dadurch gekennzeichnet, dass** die Schmelze erwärmt wird, beispielsweise um das Polymer fließfähiger zu machen.

## Claims

1. Apparatus (1) for combining a heat exchange between a liquid (8) and a heat-exchanging medium (7) with a static mixing of the liquid,
whereby fittings (2) are arranged in a casing (3) of the apparatus (1), extending longitudinally between a head end (4) and a base end (5), so that the fittings (2) form a heat-transferring and mixing structure,
whereby the fittings comprise tubes (21, 22), so that the heat-transferring medium is transportable as inner stream inside the tubes (21, 22) of the fittings (2) from the base end (5) to the head end (4), and the liquid (8) is transportable as outer stream outside the tubes (21, 22) from the head end (4) to the base end (5),
whereby the tubes (21, 22) of the fittings (2) form plane layers (200) arranged in parallel, in which one respective tube (21, 22) extend from one entry end (25) to an outlet end (24) in a serpentine configuration comprising arcs (201) and parallel partial tubular pieces (202),
**characterized in that**
reinforcement elements (6, 6', 6") are provided, which stabilize the tubes (21, 22) of the fittings (2) in longitudinal direction against the pressure gradients generated by the liquid,
whereby the reinforcement elements (6, 6', 6") connect the parallel partial tubular pieces (202) in a main area to form a non-extensible partial structure (2a), and
whereby the fittings (2) remain partially unreinforced in an auxiliary area as a longitudinally extensible partial structure (2b) that complements the main area.

2. Apparatus according to claim 1, **characterized in that** the partial tubular pieces (202) of adjacent layers (200) cross.

3. Apparatus according to claim 1 or 2, **characterized in that** in the main area of the fittings (2) the tubes (21, 22) are secured to axial bars (6') i.e. bars extending longitudinally, whereby groove-like recesses for inserting the tubes (21, 22) are provided on the bars (6'), so that the tubes (21, 22) connected through said bars (6') touch each other or are arranged at relatively small distances that are significantly smaller than the bar thickness.

4. Apparatus according to claim 1 or 2, **characterized in that** in the main area of the fittings (2) the tubes (21, 22) are connected by means of elements in the form of stripelike plates, whereby groove-like recesses for inserting the tubes (21, 22) are provided on these plates, so that the tubes connected through these bars touch each other or are arranged at relatively small distances that are significantly smaller than the plate thickness.

5. Apparatus according to claim 4, **characterized in that** the secured connections are preferably produced by means of soldering in a soldering furnace.

6. Apparatus according to any of the preceding claims, **characterized in that** in the main area of the fittings (2) the tubes (21, 22) are connected through connecting pieces (6"), whereby the connections to be secured are preferably produced by means of welding.

7. Apparatus according to any one of the preceding claims, **characterized in that** the main area of the fittings (2) is conditioned so resilient that in case of a longitudinal difference in pressure of at least 10 bar, preferably 40 bar, between the apparatus ends the fittings remain intact.

8. Apparatus according to any one of the preceding claims, **characterized in that** the head end (4) and the basis end (5) are each non-detachably connected to the casing (3) and the fittings (2) and thus the fittings are not removable.

9. Apparatus according to any one of the preceding claims, **characterized in that** the casing (3) comprises an annular chamber (31), through which the heat-transferring medium can be conducted.

10. Apparatus according to any one of the preceding claims, **characterized in that** the tubes (21, 22) of the fittings (2) are inserted in bores (40) at the head and the base ends (4 or 5, respectively) and secured there, said drills being arranged on a ring near the casing or on a strip extending across the center of the head or, respectively, the base end.

11. Apparatus according to any one of the preceding claims, **characterized in that** for the fluid (8) the head end (4) comprises a central inlet opening (42) and the base end (5) comprises a decentral outlet opening (52 positioned adjacent to the center, or vice versa, or that decentral or central openings (42, 52) are arranged at both ends (4, 5).

12. Use of an apparatus (1) according to any of the preceding claims, **characterized in that** the liquid (8) is a molten polymer, for instance polyester melt, and that the heat-transferring medium (7) is a thermal oil.

13. Use of an apparatus (1) according to claim 12, **characterized in that** the melt is cooled, for instance in order to minimize degradation.

14. Use of an apparatus (1) according to claim 12, **characterized in that** the melt is heated, for instance in order to make the polymer more flowable.

## Revendications

1. Appareil (1) qui combine un transfert thermique entre un liquide (8) et un fluide caloporteur (7) et un mélange statique du liquide,
dans lequel
des équipements (2) sont agencés dans une enveloppe (3) de l'appareil (1) qui s'étend longitudinalement entre une extrémité de tête (4) et une extrémité de base (5), de sorte que les équipements (2) constituent une structure de transfert thermique et de mélange,
les équipements comprennent des tubes (21, 22) de sorte que le fluide caloporteur est susceptible d'être convoyé en tant que flux interne à l'intérieur des tubes (21, 22) des équipements (2) depuis l'extrémité de base (5) jusqu'à l'extrémité de tête (4) et que le liquide (8) est susceptible d'être convoyé en tant que flux externe à l'extérieur des tubes (21, 22) depuis l'extrémité de tête (4) jusqu'à l'extrémité de base (5),
les tubes (21, 22) des équipements (2) constituent des couches planes (200) agencées parallèlement, dans lesquelles un tube respectif (21, 22) s'étend en forme de serpentin, incluant des arcs (201) et des tronçons de tube (202), depuis une extrémité d'entrée (25) jusqu'à une extrémité de sortie (24),
**caractérisé en ce que**
il est prévu des éléments de renforcement (6, 6', 6") qui stabilisent les tubes (21, 22) des équipements (2) en direction longitudinale contre des gradients de pression générés par le liquide,
les éléments de renforcement (6, 6', 6") relient les tronçons de tube parallèles (202) dans une zone principale pour former une structure partielle (2a) non extensible, et
dans une zone auxiliaire complémentaire à la zone principale, les équipements (2) restent au moins partiellement sans renforcement pour constituer une structure partielle (2b) extensible longitudinalement.

2. Appareil selon la revendication 1,
**caractérisé en ce que**
les tronçons de tube (202) de couches voisines (200) se croisent.

3. Appareil selon la revendication 1 ou 2,
**caractérisé en ce que**
dans la zone principale des équipements (2), les tubes (21, 22) sont fixés sur des barres (6') axiales, c'est-à-dire orientées longitudinalement, des cavités en forme de rainures étant prévues sur les barres (6') pour poser les tubes (21, 22) de sorte que les tubes (21, 22) reliés par ces barres (6') se touchent ou sont agencés à des distances relativement petites qui sont sensiblement plus petites que l'épaisseur des barres.

4. Appareil selon la revendication 1 ou 2,
**caractérisé en ce que**
dans la zone principale des équipements (2), les tubes (21, 22) sont reliés au moyen d'éléments sous forme de plaques en forme de lames, des cavités en forme de rainures étant prévues sur les plaques pour poser les tubes (21, 22), de sorte que les tubes (21, 22) reliés par ces plaques se touchent ou sont agencés à des distances relativement petites qui sont sensiblement plus petites que l'épaisseur des plaques.

5. Appareil selon la revendication 4,
**caractérisé en ce que**
les liaisons de fixation sont de préférence établies par brasage dans un four à braser.

6. Appareil selon l'une des revendications précédentes,
**caractérisé en ce que**
dans la zone principale des équipements (2), les tubes (21, 22) sont reliés au moyen de pièces de liaison (6"), les liaisons de fixation étant de préférence établies par soudage.

7. Appareil selon l'une des revendications précédentes,
**caractérisé en ce que**
la zone principale des équipements (2) est réalisée si résistante que lors d'une différence de pression longitudinale entre les extrémités de l'appareil d'au moins 10 bar, de préférence de 40 bar, les équipements restent intacts.

8. Appareil selon l'une des revendications précédentes,
**caractérisé en ce que**
l'extrémité de tête (4) et l'extrémité de base (5) sont reliées chacune de façon non détachable à l'enveloppe (3) et aux équipements (2) et ainsi les équipements ne sont pas démontables.

9. Appareil selon l'une des revendications précédentes,
**caractérisé en ce que**
l'enveloppe (3) inclut un espace à fente annulaire (31) à travers lequel peut circuler un fluide caloporteur.

10. Appareil selon l'une des revendications précédentes,
**caractérisé en ce que**
les tubes (21, 22) des équipements (2) sont intégrés et fixés à l'extrémité de tête et de base (4 ou 5) dans des perçages (40) qui sont prévus sur un anneau à proximité de l'enveloppe ou sur une lame traversant le centre de l'extrémité de tête ou de base.

11. Appareil selon l'une des revendications précédentes,
**caractérisé en ce que**
pour le liquide (8), l'extrémité de tête (4) présente une ouverture d'entrée centrale (42) et l'extrémité de base (5) présente une ouverture de sortie décentralisée (52) disposée à côté du centre, ou **en ce que** c'est le cas inverse, ou **en ce que** des ouvertures décentralisée et centrale (42, 52) sont disposées aux deux extrémités (4, 5).

12. Utilisation d'un appareil (1) selon l'une des revendications précédentes,
**caractérisée en ce que**
le liquide (8) est un polymère fondu, par exemple un polyester en fusion, et le fluide caloporteur (7) est une huile thermique.

13. Utilisation d'un appareil (1) selon la revendication 12,
**caractérisée en ce que**
on refroidit la masse en fusion, par exemple pour minimiser une décomposition.

14. Utilisation d'un appareil (1) selon la revendication 12,
**caractérisée en ce que**
on chauffe la masse en fusion, par exemple pour rendre le polymère capable de s'écouler.
